# EUROPEAN PATENT APPLICATION

(11) **EP 4 181 347 A1**
(43) Date of publication of application: **17.05.2023**
(21) Application number: 22187499.3
(22) Date of filing: 28.07.2022
(51) Int. Cl.: H02J 7/00

(54) **BATTERY MANAGEMENT SYSTEM AND METHOD FOR A BUCKING AND DISCHARGING TO BATTERY BASED ON A SAFETY OF BATTERY STORAGE**

(30) Priority: 10.11.2021 TW 110141937
(71) Applicant: STL Technology Co., Ltd., Kaohsiung City 806011 (TW)
(72) Inventor: CHANG, Wen-Fan, Kaohsiung City 806011 (TW); LI, Chun-Chieh, Kaohsiung City 806011 (TW); CHIEN, Jung-Nan, Kaohsiung City 806011 (TW); MA, Chun-Wei, Kaohsiung City 806011 (TW)
(74) Representative: Viering, Jentschura & Partner mbB Patent- und Rechtsanwälte

(57) **Abstract**

This disclosure provides a battery management system. The battery management system comprises a buck converter, a discharge loop, and a microprocessor. The microprocessor comprises a battery status monitoring circuit, a timer, and a controller. When the status of the battery is in a static state, the timer starts counting a time. If the time counted by the timer is greater than or equal to a time threshold, the controller controls that the buck converter executes a bucking to an output voltage of the battery, and then controls that the discharge loop executes a discharging to the battery. Accordingly, when the status of the battery is in a static state, the battery capacity can be discharged to a safe value moderately, so that the safety of the long-storage of the battery can be ensured, and the life of the battery can be prolonged.

## Description

This 1 application claims priority on Taiwan Patent Application No. 110141937 filed November 10th, 2021, the entire contents of which are incorporated herein by reference.

### FIELD OF THE INVENTION

This disclosure relates to a battery management system and method, particularly to a system and method for managing a bucking and discharging to a battery based on a safety of battery storage.

### BACKGROUND

The current electronic equipment is often using a rechargeable battery cell as a power source. When the battery cell is in a fully charged state and is not used for a long time, it will increase the chance of battery swelling and/or electrolyte leakage due to the chemical activity of the battery cell in a fully charged state being higher so as to cause the probability of battery damage and shorten the battery life.

### SUMMARY

In order to solve the problems existing in the prior art, the disclosure provides a battery management system, which comprise a buck converter, a discharge loop, and a microprocessor. The buck converter is connected to a battery. The discharge loop is connected to the buck converter. The microprocessor comprises a battery status monitoring circuit, a timer, and a controller. The battery status monitoring circuit is connected to the battery, and used to monitor a voltage variation of the battery to obtain a status of the battery. The timer is connected to the battery status monitoring circuit. When the status of the battery is in a static state, the timer starts counting a time. The controller is connected to the timer, the buck converter, and the discharge loop. When the time counted by the timer is greater than or equal to a time threshold, the controller controls that the buck converter executes a bucking to an output voltage of the battery, and controls that the discharge loop executes a discharging to the battery.

It is one objective of the present disclosure to provide a battery management system, wherein the microprocessor further comprises a battery capacity determination circuit; the battery capacity determination circuit is connected to the battery and the controller, and used to determine a battery capacity of the battery. If the battery capacity of the battery is lower than a capacity threshold, the controller prohibits that the buck converter executes the bucking to the output voltage of the battery, and prohibits that the discharge loop executes the discharging to the battery.

The static state of the battery represents that the battery is not charged or discharged.

It is another objective of the present disclosure to provide a battery management system, wherein the battery management system further comprises a first switch connected between the battery and the buck converter, the microprocessor further comprises a battery capacity determination circuit connected to and the battery and the controller; the controller is connected to the buck converter via the first switch; if the time counted by the timer is greater than or equal to the time threshold, the controller controls the first switch to be turned on to make that the buck converter executes the bucking to the output voltage of the battery; afterwards, when a battery capacity of the battery determined by the battery capacity determination circuit is lower than a capacity threshold, the controller controls the first switch to be turned off to make that the buck converter stops the bucking to the output voltage of the battery.

It is another objective of the present disclosure to provide a battery management system, wherein the first switch is a switch loop including a PMOS transistor and an NMOS transistor.

It is another objective of the present disclosure to provide a battery management system, wherein the battery management system further comprises a second switch connected between the buck converter and the discharge loop, the microprocessor further comprises a battery capacity determination circuit connected to and the battery and the controller; the controller is connected to the discharge loop via the second switch; if the time counted by the timer is greater than or equal to the time threshold, the controller controls the second switch to be turned on to make that the discharge loop executes the discharging to the battery; afterwards, when a battery capacity of the battery determined by the battery capacity determination circuit is lower than a capacity threshold, the controller controls the second switch to be turned off to make that the discharge loop stops the discharging to the battery.

It is another objective of the present disclosure to provide a battery management system, wherein the second switch is a switch loop including a PMOS transistor and an NMOS transistor.

It is another objective of the present disclosure to provide a battery management system, wherein the battery is configured in to an unmanned aerial vehicle, and used to provide a power required for an operation of the unmanned aerial vehicle.

It is another objective of the present disclosure to provide a battery management system, wherein the microprocessor further comprises a battery capacity determination circuit connected to the battery and the controller; when a battery capacity of the battery determined by the battery capacity determination circuit is lower than a capacity threshold, the controller prohibits that the buck converter executes the bucking to the output voltage of the battery, and prohibits that the discharge loop executes the discharging to the battery.

To achieve the above objective, the present disclosure further provide a battery management method, which is executed by a microprocessor, the battery management method comprising: monitoring a status of a battery; starting to count a time when the status of the battery is in a static state; determining whether the time is greater than or equal to the time threshold; and executing a bucking to an output voltage of the battery and executing a discharging to the battery when the time is greater than or equal to the time threshold.

It is another objective of the present disclosure to provide a battery management method, wherein after executing the bucking to the output voltage of the battery and executing the discharging to the battery, the battery management method further comprising: determining whether a battery capacity of the battery is lower than a capacity threshold; and prohibiting the discharging to the battery when the battery capacity of the battery is lower than the capacity threshold.

It is another objective of the present disclosure to provide a battery management method, wherein the status of the battery is in the static state, the battery management method further comprising: determining whether a battery capacity of the battery is lower than a capacity threshold; and prohibiting the discharging to the battery when the battery capacity of the battery is lower than the capacity threshold.

It is another objective of the present disclosure to provide a battery management method, wherein the microprocessor controls the bucking to the output voltage of the battery via a first switch, and controls the discharging to the battery via a second switch.

### BRIEF DESCRIPTION OF THE DRAWINGS

Fig. 1 is a circuit block diagram of a battery management system according to one embodiment of this disclose.
Fig. 2 is a circuit block diagram of the battery management system according to other embodiment of this disclose.
Fig. 3 is a flowchart of a battery management method according to one embodiment of this disclosure.
Fig. 4 is a flowchart of the battery management method according to other embodiment of this disclosure.

### DETAILED DESCRIPTION OF THE PREFERRED EMBODIMENTS

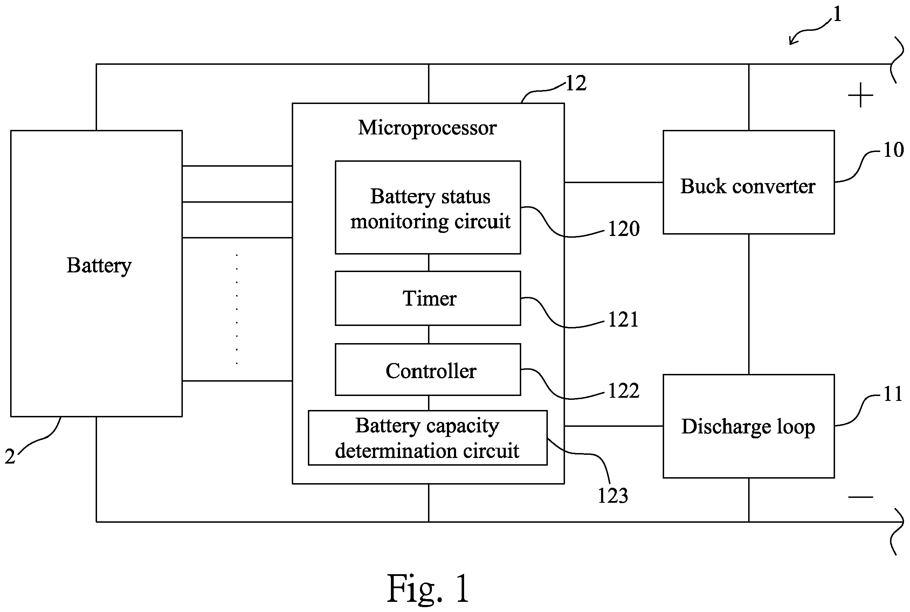

Referring to Fig. 1, there is shown a circuit block diagram of a battery management system according to one embodiment of the disclosure. As shown in Fig. 1, the battery management system 1 of this disclosure comprises a buck converter 10, a discharge loop 11, and a microprocessor 12.

The buck converter 10 is connected to the battery 2, the discharge loop 11 is connected to the buck converter 10, and the microprocessor 12 is connected to the battery 2, the buck converter 10, and the discharge loop 11. It should be noted that the terms "connected" is used broadly and encompass both direct and indirect connecting, that is, it can be connected through other elements, modules, units, devices, etc. The microprocessor 12 comprises a battery status monitoring circuit 120, a timer 121, and a controller 122. The battery status monitoring circuit 120 is connected to the battery 2. The timer 121 is connected to the battery status monitoring circuit 120. The controller 122 is connected to the timer 121, the buck converter 10, and the discharge loop 11. The battery status monitoring circuit 120 is used to monitor a status of the battery 2.

In particular, if the state of the battery 2 is in a static state, the timer 121 starts counting a time. If the time counted by the timer 121 is greater than or equal to a time threshold, the controller 122 controls that the buck converter 10 executes a bucking to an output voltage of the battery 2, and controls that the discharge loop 11 executes a discharging to the battery 2. The time threshold is a preset value, which represents a time when the battery 2 has not been used after charging. In the disclosure, the time threshold can be set to 7 days or other days. In other embodiment, the controller 122 turns on a switch included in the buck converter 10 or connected to the buck converter 10, and turns on a switch included in the discharge loop 11 or connected to the discharge loop 11 so that the output voltage of the battery can be bucked to a predetermined voltage. For example, the output voltage of the battery can be bucked from 20V to 12V or bucked from 20V to less than 12V.

The microprocessor 12 further comprises a battery capacity determination circuit 123. The battery capacity determination circuit 123 is connected to the battery 2 and the controller 121, and used to determine a battery capacity of the battery 2. As the above description, if the time counted by the timer 121 is greater than or equal to the time threshold, the battery 2 is discharged via the discharge loop 11. Afterwards, if the battery capacity of the battery 2 determined by battery capacity determination circuit 123 is lower than a capacity threshold, the controller 122 controls that the buck converter 10 stops to execute the bucking to the output voltage of the battery 2, and controls that the discharge loop 11 stops to execute the discharging to the battery 2. For example, the capacity threshold is 30% of the full charge of the battery 2. Besides, the capacity threshold is corresponding set according to the capacity storage characteristics of the battery. Furthermore, the microprocessor 12 is a chip configured in the battery management system 1, the discharge loop 11 is a circuit based a resistor, and the timer 121 includes an oscillator for timing. The battery 2 can be combined with at least one chip and/or at least electronic components to form a battery module. In one embodiment, the battery 2 is a battery pack including a plurality of cyclically rechargeable batteries is as a battery pack. In other embodiment, the battery 2 is a battery pack including a plurality of cyclically rechargeable batteries, at least one chip and/or at least electronic components.

In this disclosure, the battery capacity determination circuit 123 measures a voltage and/or a current of the battery 2 to obtain the batter power of the battery 2, or the battery capacity determination circuit 123 collects an information about the voltage and/or the current of the battery 2 to obtain the batter capacity of the battery 2. The buck converter 10 comprises a switch. When the time counted by the timer 121 is greater than or equal to the time threshold, the controller turns on the switch of the buck converter 10 so as to buck the output voltage of the battery 2; then, when the battery capacity of the battery 2 determined by the battery capacity determination circuit 123 is lower than the capacity threshold, the controller 122 turns off the switch of the buck converter 10 so as to stop the bucking of the output voltage of the battery 2. For example, the buck converter 10 is a buck converter having a NC ON end and a NC OFF end, the turning on/off of the switch of the buck converter 10 can be controlled by the switching of the NC ON end or the NC OFF end. Besides, the discharge loop 11 comprises a switch or a switch circuit. When the time counted by the timer 121 is greater than or equal to the time threshold, the controller turns on the switch or the switch circuit of the discharge loop 11 so as to discharge the battery 2; then, when the battery capacity of the battery 2 determined by battery capacity determination circuit 123 is lower than the capacity threshold, the controller 122 turns off the switch or the switch circuit of the discharge loop 11 so as to stop the discharging of the battery 2.

In a possible embodiment, the battery state monitoring unit 120 can obtain the state of the battery 2 according to a voltage variation of the voltage of the battery 2. For example, the state of the battery 2 is in a static state when the voltage of the battery 2 remains the same, the state of the battery 2 is in a charging state when the voltage of the battery 2 rises; the state of the battery 2 is in a discharging state when the voltage of the battery 2 drops. When the state of the battery 2 is in the static state, if the battery capacity of the battery 2 determined by the battery capacity determination circuit 123 is lower than the capacity threshold, the controller 122 prohibits the buck converter 10 to buck the output voltage of the battery 2, and prohibits the discharge loop 11 to discharge the battery 2.

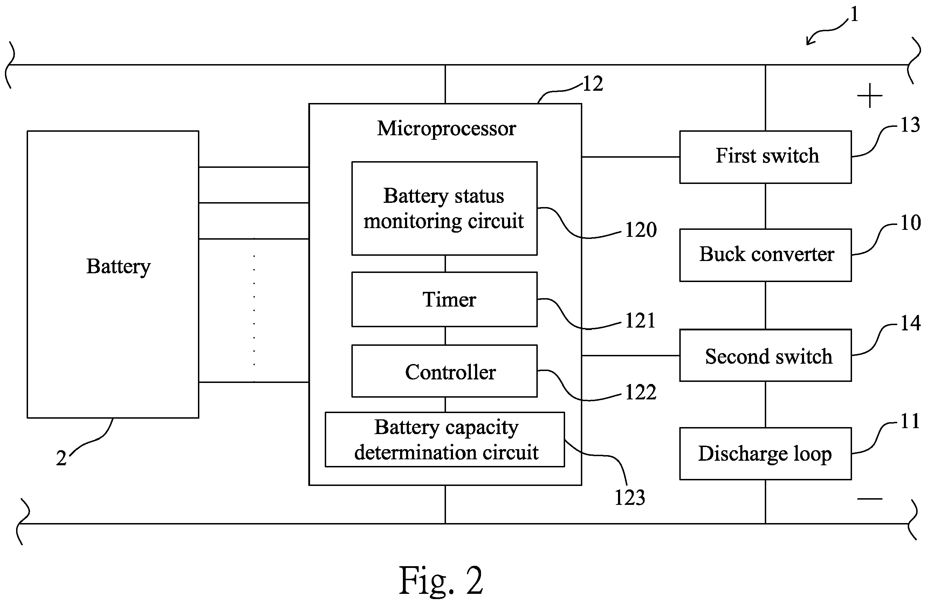

In other embodiment, as shown in Fig. 2, the battery management system 1 of the disclosure further comprises a first switch 13 connected to the battery 2 and the buck converter 10. The controller 122 is connected to the buck converter 10 via the first switch 13. If the time counted by the timer 121 is greater than or equal to the time threshold, the controller 122 turns on the first switch 13, the buck converter 10 is able to buck the output voltage of the battery 2. Afterwards, the battery capacity of the battery 2 determined by the battery capacity determination circuit 123 is lower than the capacity threshold, the controller 122 turns off the first switch 13, such that the buck converter 10 is unable to buck the output voltage of the battery 2. The first switch 13 is a switch loop including a PMOS transistor and an NMOS transistor.

Furthermore, the battery management system 1 of the disclosure further comprises a second switch 14 connected to the buck converter 10 and the discharge loop 11. The controller 122 is connected to the discharge loop 11 via the second switch 14. If the time counted by the timer 121 is greater than or equal to the time threshold, the controller 122 turns on the second switch 14, the discharge loop 11 is able to discharge the battery 2. Afterwards, the battery capacity of the battery 2 determined by the battery capacity determination circuit 123 is lower than the capacity threshold, the controller 122 turns off the second switch 14, such that the discharge loop 11 is unable to discharge the battery 2. The second switch 14 is a switch loop including a PMOS transistor and an NMOS transistor.

In one preferred embodiment, the battery 2 is configured in to the UAV, and used to provide a power required for an operation of the UAV. Of course, in other preferred embodiment, the battery 2 is also applied to a device, equipment, or system that needs to be rechargeable battery.

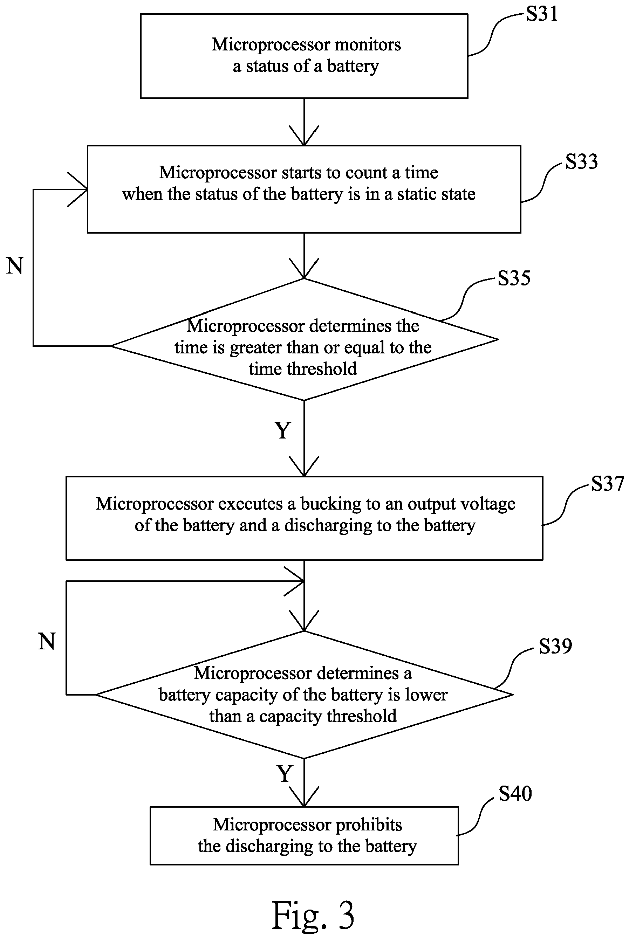

Referring to Fig. 3, there is shown a flowchart of a battery management method according to one embodiment of this disclosure, and referring with Fig. 1 at the same time. As shown in Fig. 3, the power management method of this disclosure includes steps of S31, S33, S35, S37, S39, and S40.

Firstly, in the step S31, the microprocessor 12 monitors a status of the battery 2. Talking an example as a description, the microprocessor 12 collects an information related with voltage or current of the battery 2 via the battery status monitoring circuit 120 so as to know that the state of the battery 2 is in the static state, the charging state, or the discharging state. In detail, the static state of the battery 2 represents that the battery 2 is not charged or discharged.

If the state of the battery 2 is in the static state, executing the step S33, the microprocessor 12 starts to count a time by the timer 121. On the contrary, if the state of the battery 2 is not in the static state, maintaining to execute the step S31.

In the step S35, the microprocessor 12 determines whether the time counted by the timer 121 is greater than or equal to a time threshold. If the time counted by the timer 121 is greater than or equal to the time threshold, the microprocessor 12 executes a bucking to the output voltage of the battery 12, and executes a discharging to the battery 2. For example, if the time counted by the timer 121 is greater than or equal to the time threshold, the microprocessor 12 demands that the controller 122controls the buck converter 10 to execute the bucking to the output voltage of the battery 12, and demands that the controller 122 controls the discharge loop 11 to execute the discharging to the battery 2.

In the step S39, the microprocessor 12 determines whether the battery capacity of the battery 2 is lower than a capacity threshold. If the battery capacity of the battery 2 is lower than a capacity threshold, continuing to execute the step S40, the microprocessor 12 demands that the controller 122 controls the discharge loop 11 to stop the discharging to the battery 2. For example, the microprocessor 12 obtains the information related with the voltage and/or the current of the battery 2 by the battery capacity determination circuit 123, and inquires the corresponding battery capacity of the battery 2 from a look-up table based on the information related with the voltage and/or the current of the battery 2. The look-up table lists each of battery capacities that is corresponding to each of voltages of the battery 2. When the battery capacity of the battery 2 is lower than the capacity threshold, the microprocessor 12 demands that the controller 122 controls the buck converter 10 to stop the bucking to the output voltage of the battery 2, and controls the discharge loop 11 to stop the discharging to the battery 2. On the contrary, the battery capacity of the battery 2 is not lower than a capacity threshold, the output voltage of the battery 2 is continued to be bucked by the buck converter 10, and the battery 2 is continued to be discharged by the discharge loop 11.

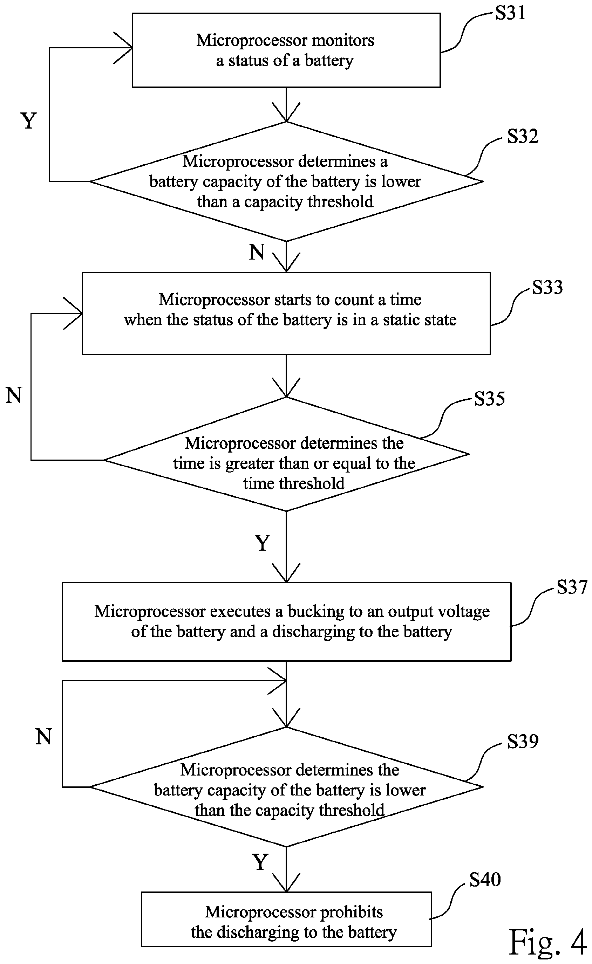

Referring to Fig. 4, there is shown a flowchart of the battery management method according to other embodiment of this disclosure, and referring with Fig. 2 at the same time. The flowchart of the present embodiment in Fig. 4 is roughly similar to the flowchart of the above embodiment in Fig. 3. The difference between the two is that the management method of the present embodiment further includes a step S32 after executing the step S31 and before executing the step S33. In the step S32, the power management method of the present embodiment further includes a step S32 after executing the step S31 and before executing the step S33. In the step S32, the microprocessor 12 determines whether the battery capacity of the battery 2 is lower than the capacity threshold. If not, the microprocessor 12 continues to execute the step S33 to S37 so as to decide whether to buck the output voltage of the battery 2 and discharge the battery 2; if yes, prohibiting to execute the bucking to the output voltage of the battery 2 and prohibiting to execute the discharging to the battery 2, and returning to S31. For example, the microprocessor 12 determines that the battery capacity of the battery 2 is lower than the capacity threshold via the battery capacity determination circuit 123, the controller 122 turns off the switch of the buck converter 10 and the switch of the discharge loop 11 so as to prohibit the bucking of the output voltage of the battery 2 and the discharging of the battery 2.

In a possible embodiment, the microprocessor 12 decides whether to execute the bucking of the output voltage of the battery 2 by controlling the turning on or off of a first switch 13, and decides whether to execute the discharging of the battery 2 by controlling the turning on or off of a second switch 14.

Other details of the battery management method of the present disclosure have been disclosed the above description, so they will not be repeated here.

Summing up, when the status of the battery 2 is in the static state for a long time, the disclosure can discharge the battery capacity of the battery 2 to a safe value moderately by the use of the discharge loop 11, so that the safety of the long-storage of the battery 2 can be ensured, and therefore the life of the battery 2 can be prolonged. Besides, while improving the safety of the long-storage of the battery 2 and the life of the battery 2, the output voltage of the battery 2 can be bucked by the buck converter 10 before the battery 2 is discharged so as to increase the safety of discharging of the battery 2. Furthermore, this disclosure will prohibit to execute the discharging to the battery 2 when the battery capacity is insufficient, so as to avoid the damage of the battery 2.

## Claims

1. A battery management system (1), comprising:
a buck converter (10) connected to a battery (2);
a discharge loop (11) connected to the buck converter (10); and
a microprocessor (12) comprising:
a battery status monitoring circuit (120), connected to the battery (2), and used to monitor a voltage variation of the battery (2) to obtain a status of the battery (2);
a timer (121) connected to the battery status monitoring circuit (120), wherein when the status of the battery (2) is in a static state, the timer (121) starts counting a time; and
a controller (122) connected to the timer (121), the buck converter (10), and the discharge loop (11);
wherein when the time counted by the timer (121) is greater than or equal to a time threshold, the controller (122) controls that the buck converter (10) executes a bucking to an output voltage of the battery (2), and controls that the discharge loop (11) executes a discharging to the battery (2).

2. The battery management system (1) according to Claim 1, wherein the microprocessor (12) further comprises a battery capacity determination circuit; the battery capacity determination circuit (123) is connected to the battery (2) and the controller, and used to determine a battery capacity of the battery (2) when the status of the battery (2) is in a static state; if the battery capacity of the battery (2) is lower than a capacity threshold, the controller (122) prohibits that the buck converter executes the bucking to the output voltage of the battery (2), and prohibits that the discharge loop (11) executes the discharging to the battery (2).

3. The battery management system (1) according to Claim 1, wherein the battery management system (1) further comprises a first switch (13) connected between the battery (2) and the buck converter, the microprocessor (12) further comprises a battery capacity determination circuit (123) connected to and the battery (2) and the controller; the controller (122) is connected to the buck converter via the first switch (13); if the time counted by the timer (121) is greater than or equal to the time threshold, the controller (122) controls the first switch (13) to be turned on to make that the buck converter executes the bucking to the output voltage of the battery (2); afterwards, when a battery capacity of the battery determined by the battery capacity determination circuit (123) is lower than a capacity threshold, the controller (122) controls the first switch (13) to be turned off to make that the buck converter stops the bucking to the output voltage of the battery (2).

4. The battery management system (1) according to Claim 3, wherein the first switch (13) is a switch loop including a PMOS transistor and an NMOS transistor.

5. The battery management system (1) according to Claim 1, wherein the battery management system (1) further comprises a second switch (14) connected between the buck converter and the discharge loop (11), the microprocessor (12) further comprises a battery capacity determination circuit (123) connected to and the battery (2) and the controller; the controller (122) is connected to the discharge loop via the second switch (14); if the time counted by the timer (121) is greater than or equal to the time threshold, the controller (122) controls the second switch (14) to be turned on to make that the discharge loop (11) executes the discharging to the battery (2); afterwards, when a battery capacity of the battery determined by the battery capacity determination circuit (123) is lower than a capacity threshold, the controller (122) controls the second switch (14) to be turned off to make that the discharge loop (11) stops the discharging to the battery (2).

6. The battery management system (1) according to Claim 5, wherein the second switch (14) is a switch loop including a PMOS transistor and an NMOS transistor.

7. The battery management system (1) according to Claim 1, wherein the battery (2) is configured in to an unmanned aerial vehicle, and used to provide a power required for an operation of the unmanned aerial vehicle.

8. The battery management system (1) according to Claim 1, wherein the microprocessor (12) further comprises a battery capacity determination circuit (123) connected to the battery (2) and the controller; when a battery capacity of the battery determined by the battery capacity determination circuit (123) is lower than a capacity threshold, the controller (122) prohibits that the buck converter executes the bucking to the output voltage of the battery (2), and prohibits that the discharge loop (11) executes the discharging to the battery (2).

9. A battery management method, which is executed by a microprocessor (12), the battery management method comprising:
monitoring a status of a battery;
starting to count a time when the status of the battery (2) is in a static state;
determining whether the time is greater than or equal to the time threshold; and
executing a bucking to an output voltage of the battery (2) and executing a discharging to the battery (2) when the time is greater than or equal to the time threshold.

10. The battery management method according to Claim 9, wherein after executing the bucking to the output voltage of the battery (2) and executing the discharging to the battery (2), the battery management method further comprising:
determining whether a battery capacity of the battery (2) is lower than a capacity threshold; and
prohibiting the discharging to the battery (2) when the battery capacity of the battery (2) is lower than the capacity threshold.

11. The battery management method according to Claim 9, wherein the status of the battery (2) is in the static state, the battery management method further comprising:
determining whether a battery capacity of the battery (2) is lower than a capacity threshold; and
prohibiting the discharging to the battery (2) when the battery capacity of the battery (2) is lower than the capacity threshold.

12. The battery management method according to Claim 9, wherein the microprocessor (12) controls the bucking to the output voltage of the battery (2) via a first switch (13), and controls the discharging to the battery (2) via a second switch (14).
